# EUROPÄISCHE PATENTSCHRIFT

(11) **EP 2 092 009 B1**
(45) Veröffentlichungstag und Bekanntmachung des Hinweises auf die Patenterteilung: **22.09.2010**
(21) Anmeldenummer: 07822234.6
(22) Anmeldetag: 06.11.2007
(51) Int. Cl.: C08K 3/36, C09D 133/06, C09D 133/14, C09D 175/04, C09D 4/00, C09D 7/12

(54) **KIESELSÄUREHALTIGE STRAHLENHÄRTBARE FORMULIERUNGEN MIT ERHÖHTEM KORROSIONSSCHUTZ AUF METALLUNTERGRÜNDEN**
SILICA-CONTAINING RADIATION-CURABLE FORMULATIONS WITH INCREASED CORROSION PROTECTION ON METAL SUBSTRATES
FORMULATIONS DURCISSABLES PAR RAYONNEMENTS CONTENANT DE L'ACIDE SILICIQUE ET OFFRANT UNE MEILLEURE PROTECTION CONTRE LA CORROSION POUR DES SUBSTRATS MÉTALLIQUES

(30) Priorität: 23.12.2006 DE 102006061379
(43) Veröffentlichungstag der Anmeldung: 26.08.2009
(73) Patentinhaber: Evonik Degussa GmbH, 45128 Essen (DE)
(72) Erfinder: SPYROU, Emmanouil, 46514 Schermbeck (DE)
(86) Internationale Anmeldenummer: PCT/EP2007/061907
(87) Internationale Veröffentlichungsnummer: WO 2008/077673

(56) Entgegenhaltungen:
- WO-A1-2008/077722
- DE-A1- 10 027 670
- JP-A- 62 110 779
- US-A1- 2004 266 899
- DATABASE WPI Week 200357 Derwent Publications Ltd., London, GB; AN 2003-599203 XP002464507 & CN 1 421 500 A (SHANGHAI XIANPENG IND CO LTD) 4. Juni 2003 (2003-06-04)

## Beschreibung

Die Erfindung betrifft kieselsäurehaltige strahlenhärtbare Formulierungen, die im ausgehärteten Zustand im besonderen Maße einen Korrosionsschutz für metallische Substrate bieten.

Strahlenhärtbare Formulierungen sind bekannt.

Ethylenische ungesättigte Prepolymere werden z. B. in P. K. T. Oldring (Hrsg.), "Chemistry and Technology of UV- and EB-Formulations for Coatings, Inks and Paints", Vol. 11. SITA Technology, London 1991 beschrieben, beispielsweise auf Basis von Epoxyacrylaten (Seiten 31 bis 68), Urethanacrylaten (Seiten 73 bis 123) und Melaminacrylaten (Seiten 208 bis 214). Auch in der Patentliteratur finden solche Formulierungen häufig Erwähnung, exemplarisch seien genannt JP 62110779 und EP 947 565.

Die Beschichtung von metallischen Untergründen stellt ein besonderes Problem für strahlenhärtbare Formulierungen dar, da es aufgrund von Schrumpfungsprozessen zu Haftungsverlust kommen kann. Daher werden für solche Untergründe häufig phosphorsäurehaltige Haftvermittler eingesetzt. Beispiele dafür sind US 5,128,387 (Beschichtung von Bierdosen) und JP 2001172554 (Beschichtung von diversen Dosen).

Bekanntermaßen zeigen Epoxyacrylate eine hervorragende Haftung sowie einen guten Korrosionsschutz auf Metalluntergründen. Nachteil solcher Beschichtungen ist aber die geringe Verformbarkeit nach der Aushärtung. Für einige Beschichtungstechnologien, z. B. Coil-Coating ist die Verformbarkeit der beschichteten Werkstücke ohne Riss der Beschichtung ausschlaggebend. Außerdem neigen solche Beschichtungen aufgrund ihrer aromatischen Anteile zum Vergilben.

WO 03/022945 beschreibt niederviskose strahlenhärtbare Formulierungen für Metalluntergründe auf Basis von strahlenhärtbaren Harzen, monofunktionellen Reaktiwerdünnern und sauren Haftvermittlern. Die eingesetzten Harze sind dabei Verkaufsware verschiedener Anbieter.

Auch EP 902 040 beinhaltet strahlenhärtbare Formulierungen. Darin werden Urethan(meth)acrylate mit monofunktionellen Estern einer ungesättigten Carbonsäure beschrieben, welche mit Alkoholen verestert sind, die einen Carbocyclus oder einen Heterocyclus enthalten.

Die Verwendung von Kieselsäure in Lacken wird beispielsweise in der Broschüre "AEROSIL für Lacke und Farben" (Nr. 68 aus den Schriftenreihe Pigmente, 3. Auflage, Ausgabedatum Dezember 1989, Degussa AG) beschrieben. Darin werden je nach Formulierung 0,5 bis 1 % Kieselsäure (AEROSIL R 972) zur Steigerung der Korrosionsfestigkeit empfohlen (S. 12).

CN 1421500 beinhaltet ein Beschichtungsmittel bestehend aus Acrylpolyurethan-Präpolymer, nanoskaligem Siliciumdioxid, Silan-Kupplungsmittel, einem Licht-Initiator und Verlaufsmittel, einem Polymerisationinhibitor und einem aktivem Acrylatverdünnungsmittel.

In US 2004/0266899 werden Formulierungen, die mindestens ein Epoxyharz, mindestens ein fein thermoplastisches Polymer-Pulver, mindestens ein Treibmittel, mindestens einen Aushärter und mindestens einen Füllstoff enthalten beschrieben. Die aufgebrachte Schicht wird durch thermische Behandlung ausgehärtet.

DE 100 27 670 beschreibt UV strahlenhärtbare Beschichtungsmittel auf Acrylatbasis, die neben dem Acrylharz einen Reaktivverdünner, ein Thixotropiermittel, einen Photoinitiator und zusätzliche Additive beinhalten. Das Beschichtungsmittel eignet sich vor allem zur Behandlung von Holzbauteilen.

WO 2008/077722 entsprechend zur EP 078 477 15.5 beschreibt eine strahlenhärtbare Formulierung, bestehend aus mindestens einem strahlenhärtbaren Harz, mindestens 5 Gew.-% Kieselsäure bezogen auf die Gesamtformulierung, mindestens einem Haftvermittler, mindestens einem mit der selben Priorität. strahlenhärtbaren Reaktivverdünner, mindestens einem Dispergiermittel, optional Photoinitiatoren, optional Pigmenten und sonstigen Zuschlagstoffen..

Aufgabe war es, strahlenhärtbare Formulierungen zu finden, die einerseits nach der Beschichtung gut verformbar, das heißt flexibel sind, andererseits aber auch einen hervorragenden Korrosionsschutz für Metalluntergründe gewährleisten.

Überraschend wurde gefunden, dass die Korrosionsfestigkeit von Lacken auf Basis von strahlenhärtbaren Formulierungen auf metallischen Untergründen ansteigt, wenn mindestens 5 Gew.-% Kieselsäure in der Formulierung enthalten sind.

Gegenstand der vorliegenden Erfindung ist eine strahlenhärtbare Formulierung, bestehend aus
A) mindestens einem strahlenhärtbaren Harz,
B) mindestens 5 Gew.-% Kieselsäure bezogen auf die Gesamtformulierung,
C) mindestens einem Haftvermittler gemäß Anspruch 1,
D) mindestens einem strahlenhärtbaren Reaktivverdünner,
E) optional Photoinitiatoren,
F) optional Pigmenten und sonstige Zuschlagstoffen.

Die Herstellung strahlenhärtbarer Harze A), Oligomere und/oder Polymere, wird beschrieben z. B. in "Radiation Curing in Polymer Science & Technology, Vol 1: Fundamentals and Methods" von J. P. Fouassier, J. F. Rabek, Elsevier Applied Science, London und New York, 1993, Chapter 5, Seiten 226 bis 236, in "Lackharze", D. Stoye, W. Freitag, Hanser-Verlag, Wien, 1996, Seite 85, 94-98, 169 und 265 und in der EP 947 565.

Je nach Rohstoffbasis unterscheidet man beispielsweise Epoxyacrylate, Polyesteracrylate, Polyetheracrylate, und Urethanacrylate, allein oder in Mischungen. Letztere können z. B. auf Polyestern oder aber auch auf Polyethern basieren. Auch die entsprechenden Methacrylate sind bekannt. Andere polymerisationsfähige Gruppen sind Epoxide und Vinylether. Auch diese können an verschiedenen Basisharzen angebunden sein.

Die Menge A) in der Formulierung variiert von 5 bis 95 Gew.-%, bevorzugt 10 bis 39 Gew.-%. Besonders bevorzugt sind Polyesterurethanacrylate. Beispiele dafür sind VESTICOAT EP 110 I BOA (Handelsprodukt der Degussa, Coatings & Colorants, Difunktionelles Polyesterurethanacrylat) und EBECRYL 1256 (Handelsprodukt von Cytec).

Bei Kieselsäuren B) unterscheidet man zwischen Fällungskieselsäuren und pyrogenen Kieselsäuren.

Hinsichtlich des Produktionsumfanges haben die Fällungskieselsäuren die bei weitem größte Bedeutung. Sie werden aus einer wässrigen Alkalisilicat-Lösung durch Fällung mit Mineralsäuren hergestellt. Dabei bilden sich kolloidale Primärteilchen, die mit fortschreitender Reaktion agglomerieren und schließlich zu Aggregaten verwachsen. Die pulverförmigen, voluminösen Formen besitzen Porenvolumina von 2,5 bis 15 mL/g und spezifische Oberflächen von 30 bis 800 m²/g. Fällungskieselsäuren werden im Rahmen der Erfindung als trockene Pulver eingesetzt. Sie werden beispielsweise von der Degussa vertrieben unter dem Handelsnamen SIPERNAT.

Unter der Bezeichnung pyrogene Kieselsäuren werden hochdisperse Kieselsäuren zusammengefasst, die durch Flammenhydrolyse hergestellt werden. Dabei wird Siliciumtetrachlorid in einer Knallgas-Flamme zersetzt. Pyrogene Kieselsäuren besitzen an ihrer nahezu porenfreien Oberfläche deutlich weniger OH-Gruppen als Fällungskieselsäuren. Wegen ihrer durch die Silanol-Gruppen bedingten Hydrophilie werden die synthetischen Kieselsäuren häufig chemischen Nachbehandlungsverfahren unterzogen, bei denen die OH-Gruppen z. B. mit organischen Chlorsilanen reagieren. Dadurch entstehen modifizierte, z. B. hydrophobe Oberflächen, welche die anwendungstechnischen Eigenschaften der Kieselsäuren wesentlich erweitern. Pyrogene Kieselsäuren werden beispielsweise von der Degussa vertrieben unter dem Handelsnamen AEROSIL.

Wichtige Kenngrößen solcher Kieselsäuren sind z. B. die spezifische BET Oberfläche, der Kohlenstoffgehalt, die Stampfdichte, der Trocknungsverlust, der SiO₂-Gehalt nach Glühen, der pH-Wert der Dispersion, die Oberflächenspannung und außerdem sonstige Nebenbestandteile (z. B. Aluminium, Eisen, Titan und Salzsäure). Im Allgemeinen weisen die pyrogenen Kieselsäuren die folgenden Kennzahlen auf: BET: 30 bis 380 m²/g; bevorzugt 70 bis 250 m²/g, pH-Wert 2,5 bis 11, bevorzugt 3 bis 7.

Besonders bevorzugt werden erfindungsgemäß pyrogene Kieselsäuren eingesetzt. Besonders bevorzugt sind hydrophobe pyrogene Kieselsäuren, unter diesen wird AEROSIL™ R 9200 der Firma Degussa GmbH, Deutschland, bevorzugt eingesetzt.

Der Anteil an Kieselsäure B) an der Gesamtformulierung beträgt 5-25 Gew.-%, bevorzugt 10-20 Gew.-%. Sie werden erfindungsgemäß als Pulver eingesetzt.

Haftvermittler C) für strahlenhärtbare Formulierungen für metallische Untergründe bestehen aus Phosphorsäure und/oder Phosphonsäure und/oder deren Umsetzungsprodukten (z. B. Ester) mit funktionalisierten Acrylaten. Während die freien Phosphorsäuregruppen für die direkte Haftung auf dem Metall verantwortlich sind, sorgen die Acrylatgruppen für einen Verbund mit der Beschichtungsmatrix. Solche Produkte werden auch beschrieben in WO 01/98413, in JP 08231564, und in JP 06313127.

Typische Handelsprodukte sind EBECRYL 169 und 170 von Cytec, ALDITOL Vxl 6219 von VIANOVA, CD 9050 und CD 9052 von Sartomer, SIPOMER PAM-100, SIPOMER PAM-200 und SIPOMER PAM-300 von Rhodia und GENORAD 40 von Rahn. Die Menge an C) in der Formulierung beträgt 0,1 bis 10 Gew.-%, bevorzugt von 1 bis 5 Gew.-%.

Strahlenhärtbare Reaktivverdünner D) und ihre Herstellung werden z. B. beschrieben in "Radiation Curing in Polymer Science & Technology, Vol I: Fundamentals and Methods" von J. P. Fouassier, J. F. Rabek , Elsevier Applied Science, London und New York, 1993, Chapter 5, Seiten 237 bis 240. Es handelt sich dabei in der Regel um Acrylat- oder Methacrylat-haltige Stoffe, die bei Raumtemperatur flüssig und damit in der Lage sind, die Gesamtviskosität der Formulierung herabzusetzen. Beispiele für solche Produkte sind Isobornylacrylat, Hydroxypropylmethacrylat, Trimethylolpropanformalmonoacrylat, Tetrahydro-fufurylacrylat, Phenoxyethylacrylat Trimethylolpropantriacrylat, Dipropylenglycoldiacrylat, Tripropylenglycoldiacrylat, Hexandioldiacrylat, Pentaerythrittetraacrylat, Laurylacrylat sowie propoxilierte oder ethoxilierte Varianten dieser Reaktivverdünner, aber auch urethanisierte Reaktivverdünner wie EBECRYL 1039 (Cytec) und andere. Außerdem in Frage kommen auch andere flüssige Komponenten, die in der Lage sind, unter Bedingungen der radikalischen Polymerisation mit zu reagieren z. B. Vinylether oder Allylether. Die Menge an D) in der Formulierung beträgt 5 bis 90 Gew.-%, bevorzugt 10 bis 70 Gew.-%.

Photoinitiatoren E) und ihre Herstellung werden beschrieben z. B. in "Radiation Curing in Polymer Science & Technology, Vol II: Photoinitiating Systems" von J. P. Fouassier, J. F. Rabek , Elsevier Applied Science, London und New York, 1993. Häufig handelt es sich hierbei um α-Hydroxyketone bzw. Derivate dieser. Die Photoinitiatoren können, falls vorhanden, in Mengen von 0,2 bis 10 Gew.-% enthalten sein.

Geeignete Pigmente F) in strahlenhärtbaren Formulierungen werden beschrieben, z. B. in "Radiation Curing in Polymer Science & Technology, Vol IV: Practical Aspects and Application" von J. P. Fouassier, J. F. Rabek , Elsevier Applied Science, London und New York, 1993, Chapter 5, Seiten 87 bis 105 und können in Mengen von 1 bis 40 Gew.-% enthalten sein. Beispiele für Korrosionsschutzpigmente findet man z. B. in Pigment + Füllstoff Tabellen, O. Lückert, Vincentz Verlag Hannover, 6. Auflage 2002. Beispielhaft seien genannt: SHIELDEX C 303 (Grace Davison) und HALOX Coil X 100, HALOX Coil X 200 und HALOX CW 491 (Erbslöh), HEUCOPHOS SAPP oder auch ZPA (Heubach), K-White TC 720 (Tayca) und HOMBICOR (Sachtleben). Natürlich kommen auch einfache anorganische Salze wie z. B. Zinkphosphat in Betracht.

Sonstige Zuschlagstoffe F) für strahlenhärtbare Formulierungen gibt es in verschiedenen Zusammensetzungen und für diverse Zwecke, z. B. Verlaufsmittel, Mattierungsmittel, Entgasungsmittel und andere.

Einige von Ihnen werden beschrieben in der Broschüre "SELECTED DEGUSSA PRODUCTS FOR RADIATION CURING AND PRINTING INKS", herausgegeben von der Tego. Coating & Ink Additives, Essen, 2003. Die Menge an solchen Additiven variiert von 0,01 bis 5 Gew.-%, falls vorhanden.

Die Auftragung der strahlenhärtbaren Formulierung kann durch in der Lacktechnologie bekannte Applikationstechniken erfolgen, z. B. Rakeln, Walzen, Sprühen oder Spritzen.

Als metallischer Untergrund eignet sich vor allem Stahl, optional vorbehandelt, aber auch Aluminium und sonstige Metalle oder Legierungen, die aus Korrosionsschutzgründen mit einer Beschichtung versehen werden.

Die Aushärtung erfolgt in Anwesenheit von Photoinitiatoren unter UV-Licht oder in Abwesenheit von Photoinitiatoren unter Elektronenstrahlen. Die Eigenschaften der ausgehärteten Lacke sind weitgehend unabhängig von der Aushärtungsmethode. UV-Härtung und UV-Lampen werden z. B. beschrieben in "Radiation Curing in Polymer Science & Technology, Vol I: Fundamentals and Methods" von J. P. Fouassier, J. F. Rabek, Elsevier Applied Science, London und New York, 1993, Chapter 8, Seiten 453 bis 503.

Elektronenstrahlhärtung und Elektronenhärter werden z. B. beschrieben in "Radiation Curing in Polymer Science & Technology, Vol I: Fundamentals and Methods" von J. P. Fouassier, J. F. Rabek, Elsevier Applied Science, London und New York, 1993, Chapter 4, Seiten 193 bis 225 und in Chapter 9, Seiten 503 bis 555.

Gegenstand der Erfindung ist weiterhin die Verwendung einer strahlenhärtbaren Formulierung,
bestehend aus
A) mindestens einem strahlenhärtbaren Harz,
B) mindestens 5 Gew.-% Kieselsäure bezogen auf die Gesamtformulierung,
C) mindestens einem Haftvermittier, gemäß Anspruch 1,
D) mindestens einem strahlenhärtbaren Reaktivverdünner,
E) optional Photoinitiatoren,
F) optional Pigmenten und sonstigen Zuschlagstoffen,
   als Primer, Zwischenschickt, Decklack und/oder Klarlack.

Die erfindungsgemäße Beschichtung kann entweder allein verwendet werden, oder aber als eine Schicht eines Mehrschichtaufbaus. Sie kann beispielsweise als Primer, als Zwischenschicht oder als Deck- oder Klarlack aufgetragen sein. Die über oder unter der erfindungsgemäßen Beschichtung liegenden Schichten können entweder konventionell thermisch ausgehärtet werden, oder aber auch durch Strahlung.

Ebenfalls Gegenstand der Erfindung ist die Verwendung einer strahlenhärtbaren Formulierung,
bestehend aus
A) mindestens einem strahlenhärtbaren Harz,
B) mindestens 5 Gew.-% Kieselsäure bezogen auf die Gesamtformulierung,
C) mindestens einem Haftvermittler, gemäß Anspruch 1
D) mindestens einem strahlenhärtbaren Reaktivverdünner,
E) optional Photoinitiatoren,
F) optional Pigmenten und sonstigen Zuschlagstoffen,
zur Herstellung von Beschichtungen nach dem Coil Coating-Verfahren.

Ein weiterer Gegenstand der vorliegenden Erfindung sind Beschichtungen enthaltend die erfindungsgemäßen Formulierungen.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

| **Einsatzstoffe** | **Produktbeschreibung, Hersteller** |
|---|---|
| VESTICOAT EP 110 / IBOA | Strahlenhärtbares Harz, Degussa AG, Coatings & Colorants, gelöst in 25 % IBOA |
| LAROMER 8887 | Trimethylolpropanmonoformalacrylat, BASF, strahlenhärtbarer Reaktivverdünner |
| IBOA | Isobornylacrylat, Cytec, monofunktioneller Reaktivverdünner |
| ADDITOL VXL 6219 | Phosphorsäurehaltiger Haftvermittler, Sartomer |
| IRGACURE 184 | Photoinitiator, Ciba |
| AEROSIL R 9200 | Pyrogene Kieselsäure, Degussa, BET ca. 170 m²/g, SiO₂-Gehalt nach Glühen > 99,5%, pH-Wert 3 - 5, CAS Nr. 68611-44-9 |
| PZ 20 Zinkphosphat | Zinkphosphat, SNCZ |

### A) Allgemeine Herstellvorschrift

Das Harz wird mit Reaktivverdünner und Kieselsäure gemischt und am Dispermaten 20 Minuten bei 9000 U/min dispergiert. Danach wird der Haftvermittler mit einem Schnellrührer (2000 U/min) eingerührt.
a) Elektronenstrahlhärtung: Die gebrauchsfähige Formulierung wird auf Stählbleche, (Q-Panel R36, unbehandeltes Stahlblech) aufgerakelt und nachfolgend unter einem Elektronenstrahler (5 MRad, ESI) ausgehärtet.
b) UV-Härtung: Zu der vorgenannten Mischung werden noch 3 % IRGACURE 184 gegeben und mit Hilfe des Schnellrührers (2000 U/min) eingerührt. Die gebrauchsfähige Formulierung wird auf Stahlbleche, (Q-Panel R36) aufgerakelt und nachfolgend unter einer UV-Lampe (3 m/min, Minicure, Quecksilberdampflampe, 80 W/cm, Technigraf) ausgehärtet.

Alle Angaben in Gew.-% bezogen auf Gesamtgewicht der Formulierung.

| **Versuch** | **1** | **I*** | **2** | **II*** |
|---|---|---|---|---|
| Vesticoat EP 110 / IBOA | 20,0 | 20,0 | 20,0 | 20,0 |
| IBOA | 22,5 | 29,5 | 19,5 | 26,5 |
| Laromer 8887 | 27,5 | 34,5 | 27,5 | 34,5 |
| Aerosil VP 9200 | 15,0 | 1,0 | 15,0 | 1,0 |
| ADDITOL VXL 6219 | 5,0 | 5,0 | 5,0 | 5,0 |
| IRGACURE 184 | - | - | 3,0 | 3,0 |
| PZ 20 | 10,0 | 10,0 | 10,0 | 10,0 |
| 96 h Salzsprühtest (Unterwanderung [cm]) | 4,5 | > 15 | 4,8 | > 15 |
| Erichsentiefung [mm] | 8,5 | 10,5 | 9,5 | 11 |
| Schichtdicke [µm] | 28 - 32 | 31 - 34 | 27 - 33 | 28 - 31 |

| | | | | |
|---|---|---|---|---|
| * Nicht erfindungsgemäße Vergleichsversuche 1 und I* wurden durch Elektronenstrahlen, 2 und II* durch UV-Strahlen ausgehärtet. | | | | |

Alle Lacke weisen eine ausreichende Flexibilität auf (Erichsentiefung >5 mm). Lediglich die erfindungsgemäßen Formulierungen zeigen einen Korrosionsschutz (Unterwanderung < 5 cm) nach 96 h Salzsprühtest (DIN 53167)

## Patentansprüche

1. Strahlenhärtbare Formulierung,
bestehend aus
A) mindestens einem strahlenhärtbaren Harz,
B) mindestens 5 Gew.-% Kieselsäure bezogen auf die Gesamtformulierung,
C) mindestens einem Haftvermittler, bestehend aus Phosphorsäure und/oder Phosphonsäure und/oder deren Umsetzungsprodukte mit funktionalisierten Acrylaten,
D) mindestens einem strahlenhärtbaren Reaktivverdünner,
E) optional Photoinitiatoren,
F) optional Pigmenten und sonstigen Zuschlagstoffen.

2. Strahlenhärtbare Formulierung nach Anspruch 1,
**dadurch gekennzeichnet,**
**dass** als Harze A) Epoxyacrylate, Polyesteracrylate, Polyetheracrylate, und Urethanacrylate, allein oder in Mischungen, enthalten sind.

3. Strahlenhärtbare Formulierung nach mindestens einem der vorherigen Ansprüche,
**dadurch gekennzeichnet,**
**dass** als Harz A) Polyesterurethanacrylate enthalten sind.

4. Strahlenhärtbare Formulierung nach mindestens einem der vorherigen Ansprüche,
**dadurch gekennzeichnet,**
**dass** die Menge der Harze A) 5 bis 95 Gew.-% beträgt.

5. Strahlenhärtbare Formulierung nach mindestens einem der vorherigen Ansprüche,
**dadurch gekennzeichnet,**
**dass** als Kieselsäure B) Fällungskieselsäuren enthalten sind.

6. Strahlenhärtbare Formulierung nach mindestens einem der vorherigen Ansprüche,
**dadurch gekennzeichnet,**
**dass** Fällungskieselsäuren mit Porenvolumina von 2,5 bis 15 mUg und spezifischer Oberfläche von 30 bis 800 m²/g enthalten sind.

7. Strahlenhärtbare Formulierung nach mindestens einem der vorherigen Ansprüche,
**dadurch gekennzeichnet,**
**dass** als Kieselsäure B) pyrogene Kieselsäuren enthalten sind.

8. Strahlenhärtbare Formulierung nach mindestens einem der vorherigen Ansprüche,
**dadurch gekennzeichnet,**
**dass** als Kieselsäure B) hydrophobe pyrogene Kieselsäuren enthalten sind.

9. Strahlenhärtbare Formulierung nach mindestens einem der vorherigen Ansprüche, wobei der Anteil an Kieselsäure B) an der Gesamtformulierung 5 bis 25 Gew.-% beträgt.

10. Strahlenhärtbare Formulierung nach mindestens einem der vorherigen Ansprüche,
**dadurch gekennzeichnet,**
**dass** die Kieselsäure als Pulver eingesetzt wird.

11. Strahlenhärtbare Formulierung nach mindestens einem der vorherigen Ansprüche,
**dadurch gekennzeichnet,**
**dass** der Haftvermittler C) in Mengen von 0,1 bis 10 Gew.-% enthalten ist.

12. Strahlenhärtbare Formulierung nach mindestens einem der vorherigen Ansprüche,
**dadurch gekennzeichnet,**
**dass** Reaktivverdünner D) ausgewählt aus Isobornylacrylat, Hydroxypropylmethacrylat, Trimethylolpropanformalmonoacrylat, Tetrahydrofufurylacrylat, Phenoxyethylacrylat, Trimethylolpropantriacrylat, Dipropylenglycoldiacrylat, Tripropylenglycoldiacrylat, Hexandioldiacrylat, Pentaerythrittetraacrylat, Laurylacrylat, und/oder propoxilierte oder ethoxilierte Varianten dieser Reaktivverdünner, und/oder urethanisierte Reaktivverdünner, enthalten sind.

13. Strahlenhärtbare Formulierung nach mindestens einem der vorherigen Ansprüche,
**dadurch gekennzeichnet,**
**dass** die Menge an D) in der Formulierung 5 bis 90 Gew.-% beträgt.

14. Verwendung einer strahlenhärtbaren Formulierung,
bestehend aus
A) mindestens einem strahlenhärtbaren Harz,
B) mindestens 5 Gew.-% Kieselsäure bezogen auf die Gesamtformulierung,
C) mindestens einem Haftvermittler, bestehend aus Phosphorsäure und/oder Phosphonsäure und/oder deren Umsetzungsprodukte mit funktionalisierten Acrylaten,
D) mindestens einem strahlenhärtbaren Reaktivverdünner,
E) optional Photoinitiatoren,
F) optional Pigmenten und sonstigen Zuschlagstoffen,
als Primer, Zwischenschicht, Decklack und/oder Klarlack oder zur Herstellung von Beschichtungen nach dem Coil Coating-Verfahren.

15. Beschichtungen enthaltend Formulierungen gemäß einem oder mehreren der Ansprüche 1 bis 13.

## Claims

1. Radiation-curable formulation composed of
A) at least one radiation-curable resin,
B) at least 5% by weight of silica, based on the total formulation,
C) at least one adhesion promoter, composed of phosphoric acid and/or phosphonic acid and/or reaction products thereof with functionalized acrylates,
D) at least one radiation-curable reactive diluent,
E) optionally photoinitiators,
F) optionally pigments and other adjuvants.

2. Radiation-curable formulation according to Claim 1, **characterized in that** epoxy acrylates, polyester acrylates, polyether acrylates and urethane acrylates, alone or in a mixture, are included as resins A).

3. Radiation-curable formulation according to at least one of the preceding claims, **characterized in that** polyesterurethane acrylates are included as resin A).

4. Radiation-curable formulation according to at least one of the preceding claims, **characterized in that** the amount of the resins A) is 5% to 95% by weight.

5. Radiation-curable formulation according to at least one of the preceding claims, **characterized in that** precipitated silicas are included as silica B).

6. Radiation-curable formulation according to at least one of the preceding claims, **characterized in that** precipitated silicas having pore volumes from 2.5 to 15 ml/g and a specific surface area from 30 to 800 m²/g are included.

7. Radiation-curable formulation according to at least one of the preceding claims, **characterized in that** fumed silicas are included as silica B).

8. Radiation-curable formulation according to at least one of the preceding claims, **characterized in that** hydrophobic fumed silicas are included as silica B).

9. Radiation-curable formulation according to at least one of the preceding claims, the fraction of silica B) as a proportion of the total formulation being 5% to 25% by weight.

10. Radiation-curable formulation according to at least one of the preceding claims, **characterized in that** the silica is used in powder form.

11. Radiation-curable formulation according to at least one of the preceding claims, **characterized in that** the adhesion promoter C) is included in amounts from 0.1% to 10% by weight.

12. Radiation-curable formulation according to at least one of the preceding claims, **characterized in that** reactive diluents D) selected from isobornyl acrylate, hydroxypropyl methacrylate, trimethylolpropane formal monoacrylate, tetrahydrofurfuryl acrylate, phenoxyethyl acrylate, trimethylolpropane triacrylate, dipropylene glycol diacrylate, tripropylene glycol diacrylate, hexanediol diacrylate, pentaerythritol tetraacrylate, lauryl acrylate, and/or propoxylated or ethoxylated variants of these reactive diluents, and/or urethanized reactive diluents, are included.

13. Radiation-curable formulation according to at least one of the preceding claims, **characterized in that** the amount of D) in the formulation is 5% to 90% by weight.

14. Use of a radiation-curable formulation composed of
A) at least one radiation-curable resin,
B) at least 5% by weight of silica, based on the total formulation,
C) at least one adhesion promoter, composed of phosphoric acid and/or phosphonic acid and/or reaction products thereof with functionalized acrylates,
D) at least one radiation-curable reactive diluent,
E) optionally photoinitiators,
F) optionally pigments and other adjuvants as a primer, intercoat, topcoat and/or clearcoat material or for producing coatings by the coil coating process.

15. Coatings containing formulations according to one or more of Claims 1 to 13.

## Revendications

1. Composition durcissable par irradiation, constituée de
A) au moins une résine durcissable par irradiation,
B) au moins 5 % en poids d'acide silicique, par rapport à la composition totale,
C) au moins un promoteur d'adhérence, constitué de l'acide phosphorique et/ou de l'acide phosphonique et/ou leurs produits de réaction avec des acrylates fonctionnalisés,
D) au moins un diluant réactif durcissable par irradiation,
E) en option des photoamorceurs,
F) en option des pigments et d'autres additifs.

2. Composition durcissable par irradiation selon la revendication 1, **caractérisée en ce qu'**elle contient en tant que résines A) des époxyacrylates, des polyesteracrylates, des polyétheracrylates et des uréthanne-acrylates, seuls ou en mélanges.

3. Composition durcissable par irradiation selon au moins l'une des revendications précédentes, **caractérisée en ce que** des polyester-uréthanne-acrylates sont contenus en tant que résine (A).

4. Composition durcissable par irradiation selon au moins l'une des revendications précédentes, **caractérisée en ce que** la quantité des résines A) va de 5 à 95 % en poids.

5. Composition durcissable par irradiation selon au moins l'une des revendications précédentes, **caractérisée en ce que** des acides siliciques précipités sont contenus en tant qu'acide silicique B).

6. Composition durcissable par irradiation selon au moins l'une des revendications précédentes, **caractérisée en ce qu'**elle contient des acides siliciques précipités ayant des volumes de pores de 2,5 à 15 ml/g et une surface spécifique de 30 à 800 m²/g.

7. Composition durcissable par irradiation selon au moins l'une des revendications précédentes, **caractérisée en ce que** des acides siliciques pyrogénés sont contenus en tant qu'acide silicique B).

8. Composition durcissable par irradiation selon au moins l'une des revendications précédentes, **caractérisée en ce que** des acides siliciques pyrogénés hydrophobes sont contenus en tant qu'acide silicique B).

9. Composition durcissable par irradiation selon au moins l'une des revendications précédentes, **caractérisée en ce que** la teneur en acide silicique B) de la composition totale va de 5 à 25 % en poids.

10. Composition durcissable par irradiation selon au moins l'une des revendications précédentes, **caractérisée en ce que** l'acide silicique est utilisé sous forme de poudre.

11. Composition durcissable par irradiation selon au moins l'une des revendications précédentes, **caractérisée en ce qu'**elle contient le promoteur d'adhérence C) en quantités de 0,1 à 10 % en poids.

12. Composition durcissable par irradiation selon au moins l'une des revendications précédentes, **caractérisée en ce que** le diluant réactif D) est choisi parmi l'acrylate d'isobornyle, le méthacrylate d'hydroxypropyle, le formalmonoacrylate de triméthylolpropane, l'acrylate de tétrahydrofurfuryle, l'acrylate de phénoxyéthyle, le triacrylate de triméthylolpropane, le diacrylate de dipropylèneglycol, le diacrylate de tripropylèneglycol, le diacrylate d'hexanediol, le tétraacrylate de pentaérythritol, l'acrylate de lauryle et/ou des variantes éthoxylées ou propoxylées de ces diluants réactifs, et/ou des diluants réactifs transformés en uréthanne.

13. Composition durcissable par irradiation selon au moins l'une des revendications précédentes, **caractérisée en ce que** la quantité de D) dans la composition va de 5 à 90 % en poids.

14. Utilisation d'une composition durcissable par irradiation, constituée de
A) au moins une résine durcissable par irradiation,
B) au moins 5 % en poids d'acide silicique, par rapport à la composition totale,
C) au moins un promoteur d'adhérence, constitué de l'acide phosphorique et/ou de l'acide phosphonique et/ou leurs produits de réaction avec des acrylates fonctionnalisés,
D) au moins un diluant réactif durcissable par irradiation,
E) en option des photoamorceurs,
F) en option des pigments et d'autres additifs, en tant que primaire, couche intermédiaire, peinture de finition et/ou vernis ou pour la production de revêtements selon le procédé *Coil Coating* (enduction de rubans continus).

15. Revêtements contenant des compositions selon une ou plusieurs des revendications 1 à 13.
